# EUROPEAN PATENT APPLICATION

(11) **EP 3 825 096 A1**
(43) Date of publication of application: **26.05.2021**
(21) Application number: 19211062.5
(22) Date of filing: 22.11.2019
(51) Int. Cl.: B29C 49/06, B29C 49/02, B29L 31/00

(54) **METHOD FOR OBTAINING A COATED PREFORM AND CONTAINER**

(71) Applicant: Molecular Plasma Group SA, 3895 Foetz (LU)
(72) Inventor: HEYBERGER, Régis, 57100 Thionville (FR); SCHELTJENS, Gill, 2850 Boom (BE); BOREK-DONTEN, Joanna, 6700 Arlon (BE); BAX, Bart Jan, 1261XK Blaricum (NL)
(74) Representative: IPLodge bv

(57) **Abstract**

Disclosed is a method wherein a preform, suitable for stretch blow moulding, is provided with a coating, the method comprising the steps of: 1) providing a low-energy, cold plasma; 2) exposing precursors and the preform to said plasma, thereby chemically activating the precursors and/or the preform; 3) depositing a coating layer on the preform by reaction of the precursors with each other and/or with the preform.

## Description

### FIELD OF THE INVENTION

The present invention relates to a method for obtaining a coated preform and/or container. The coating on the preform and/or container may serve multiple functions. The presented method is, however, extremely versatile and allows easy optimization of the resulting coating to achieve the desired effect. The method can be applied on a preform, whereby the coated preform is intended to result in a container after a subsequent container-formation step which may typically involve an increase of the preform in size and/or a change in shape. The method may also be applied to a container. In a further aspect, the present invention also relates to a coated preform, preferably a thermoplastic preform, suitable for the use in a method for manufacturing plastic containers, preferably a stretch blow process, and also relates to a coated container. The coated container may be obtained using a coated preform which is subsequently formed into a container, and/or the coated container may be obtained by coating a container. In a specific aspect, the present invention also relates to a method for manufacturing double-walled containers, preferably using a stretch blow process. The present invention pertains to the technical field of plasma deposition onto preforms or container, preferably made from a thermoplastic materials.

### BACKGROUND

Liquid containers such as bottles are commonly made from a plastic, and preferably a thermoplastic material, such as polyethylene terephthalate (PET), polylactic acid (PLA), polyethylene 2,5-furandicarboxylate (PEF), polypropylene (PP) and polyethylene (PE). One typical way of producing such bottles is to first manufacture a preform, e.g. by injection moulding, and subsequently increase the preform to its full bottle size by a stretch blow process.

When producing a large number of articles, industry tends to a prefer a modular production process wherein each step of the process can be separately optimized for production speed and production costs. When producing containers as described above, the process steps of producing a preform and of the stretch blow process can be separated. The preform production step can then be performed in a dedicated factory at a dedicated apparatus, whereas the stretch blowing step can possibly be performed in another factory with another dedicated apparatus. One consequence of this separation is that preforms need to be storable for a certain amount of time. The storage time may however affect the properties of the preform and thus of the resulting container. A major cause of deterioration hereby is moisture pick-up.

Currently employed methods for the reduction of moisture pick-up rate include the usage of scavengers or spraying a water-resistant layer onto the inner and/or outer surface of a preform. However, the moisture pick-up rate can still be too high resulting in several disadvantages, including a decreased shelf-life. Further, the currently employed methods result in a coating colour in the product which is visible in the sense that it which may give an impression of a faulty or contaminated preform. It also creates recycling issues. There is no coating solutions against moisture pick-up using a coating which is commonly used in production.

One of the problems when using a coating to reduce moisture pick-up for preforms is that they are intended to change drastically in size e.g. by a subsequent blow stretch process and the coating needs to expand following the preform expansion. The inventors have found that when the coating is sprayed onto the whole inner surface of the preform, the stretch blow moulding ability is decreased and the expected function is not present.

Other problems may also exist with respect to preforms or containers:
- preforms or containers, in particular those made of a thermoplastic material, may have increased friction force relative to one another, which may cause problems in feeding lines;
- for double-wall containers such as a bag-in-container, a force required for delaminationof the inner wall from the outer wall may occur and may vary depending on a number of production parameters. An elevated delamination force may arise during production, prior, during or after a container-formation step such as a blow stretch moulding step, or it may become apparent when trying to fill or empty the container with fluids;
- when a thermoplastic preform undergoes a container-forming process, this is almost always accompanied with a heating process, allow plastic formation of the preform. In such a process, heat transfer to the preform needs to be optimized;
- it may be difficult or costly to provide a colour on a very localized place to a container, e.g. for traceability, anti-counterfeiting or any other desired function;
- it may also be difficult or costly to print directly onto a container at a quality similar to current printing techniques, and use of label which is attached to the container may not always be desired;
- gasses may permeate into the preform and/or container material:
   - carbon dioxide (CO₂), e.g. originating from CO₂-containing fluids inside the container, may migrate outside of the container material. This has a deteriorating effect on the quality of the fluid;
   - oxygen (O₂), e.g. from surrounding air, may migrate into the preform or container material, leading to a degradation of the contained fluid;
- light, e.g. visible or UV-light, may have a deteriorating effect on the preform or container material (e.g. degradation) and/or on the fluid inside (e.g. yeast in beer can be highly sensitive to visible and UV light);
- undesired chemicals which arise in the material during manufacturing as degradation product, may migrate to the liquid in the container, such as acetaldehyde being formed in PET materials which could change the smell and taste of the liquid;
- viscous products in a container may not always release very easy from the container;
- cracking of the preform or container in presence of swelling chemical products destroying the plastic material integrity, and thus its performance.

It has been proposed to use plasmas for depositing barrier layers onto polymer containers. Some of the documents, employing plasma technology to deposit a barrier layer onto a polymer container, are discussed in the following paragraphs.

EP2836439B1 discloses a method used for plasma-enhanced coating of substrates. A process gas is supplied to a plasma source, wherein the process gas may be converted, either partially or fully, into a plasma. The plasma can be ignited at the end of at least one inner electrode, to possess a high frequency under ambient pressure and at temperatures in a range of e.g. 10°C to 50°C. The plasma can further be discharged through a nozzle tube end of the nozzle tube element surrounding the inner electrode, to coat a substrate.

The document further describes the possibility of depositing multiple layers onto the substrate, wherein the multiple layers could comprise layers of different compositions and layer characteristics. The multiple layer deposition could be achieved using a plurality of coating steps.

US4667620A describes a method for making open ended plastic containers, having a decreased gas permeability. Wherein the method comprises the steps of positioning the plastic container in an ion coating apparatus with the open end unshielded and ionizing and vaporizing a material for deposition on the interior surface of the container.

The document provides a solution for overcoming the deficiencies of the barrier-layer containers and the dip-coated containers by providing a plastic container which provides excellent barrier characteristics, is cheaply and easily treated, and can be completely recycled by conventional recycling techniques without need for removal of dip-coated layers.

US20080292781A1 discloses a method for monitoring the composition of a plasma, this plasma being generated from determined precursors for depositing a film onto a polymer material. Further, the document describes an application of the method of monitoring the composition of a plasma, whereby the plasma is a microwave plasma for depositing a film onto a hollow body made of PET.

The patent application discloses that the object of the invention is to detect the presence of a leak in the internal volume of the container during plasma generation.

An important condition for a coating deposition, is that the coating remains intact such as not to show any visible cracks or other defects. It is highly preferred that the coating co-stretches with the material of the preform. This has two main advantages. Firstly there is no need to remove the coating afterwards. This is in contrast to non-co-stretching coatings which tend to crack or result in another type of visible defect. Secondly, the resulting coating on the fully-sized bottle may serve a further purpose.

Document WO2014017908A1 discloses a container of a bag-in-container type, wherein a neck region of the container is provided with at least one opening extending substantially radially there through, into a space between the outer container and an inner container adjacent thereto, wherein the neck region is provided with coupling elements, preferably at opposite sides of said at least one opening, seen in circumferential direction, for coupling of a connecting device to the container for introducing a pressure fluid through said at least one opening into a space between the inner and outer container. Such pressurized fluid can be used to compress the bag in the container, thereby making the fluid inside the bag, e.g. the beer, to come out from the opening. This document described a stretch-blow process for producing a double-walled container. For such applications, it is important that the inner bag or inner container delaminates from the outer container, either during production or during use.

EP2148770 describes a bag-in-container made from an inner preform and an outer preform of the same material, wherein the inner and outer layers of the container release. Application of a release agent is advantageous in some cases.

The present invention aims to resolve at least some of the problems and disadvantages mentioned above. In particular, the present invention aims to achieve at least the following effects with respect to the preform or the container resulting therefrom:
- avoid moisture pick up of the preform to increase the shelf life before being increased in size to obtain a container, e.g. by blow stretch moulding;
- improving delamination of preforms and/or containers to improve blow stretch moulding infeed, e.g. when manufacturing a double-walled container such as a bag-in-container, or during later use of the container;
- improve preform heat absorption to improve blow stretch moulding processability;
- reduce friction to improve slip between preforms and resulting containers to improve the preforms and containers being conveyed in a filling line;
- colour the preform for traceability, anti-counterfeiting or any other desired function;
- improve CO₂ barrier property of the container;
- improve O₂ barrier property of the container;
- improve light barrier (e.g. against UV light);
- limiting migration of undesired chemicals arising in the material to the liquid in the container, such as acetaldehyde being formed in PET materials which could change the smell and taste of the liquid. In this respect the present invention also aims at providing scavenging functionalities;
- internal anti-stick properties for easy-release of viscous products such as mayonnaise, ketchup, syrups, etc.;
- improve direct object printing ability of the container;
- improve stress cracking resistance of the container.

### SUMMARY OF THE INVENTION

The present invention and embodiments thereof serve to provide a solution to one or more of above-mentioned disadvantages. To this end, the present invention relates to a method for providing a coating layer on a preform for a container as specified in claim 1, or directly on a container as specified in claim 14. The preforms and/or containers are preferably made from a thermoplastic material. The coated surface may comprise an inner surface, an outer surface or both an inner surface and an outer surface of the preform and/or container.

A specific preferred embodiment of the method relates to an invention wherein the coating thickness is between 5 and 300 nm, and more preferably between 10 and 150 nm, which was observed to result in an adequate thickness to achieve a desired functionality, while not becoming ostensibly visible as a coating.

In a further aspect, the present invention relates to a coated preform, whereby the coating is obtainable using a method in accordance with claim 1 or any other method for providing a coating on a preform in accordance with the present invention. A plasma coated preform, preferably formed from a thermoplastic material, has several advantages. The coating is deposited with high precision both in terms of thickness and in the location of the deposition. Hereby the precursor resources are handled as efficiently as possible, increasing the efficiency of the production process. Furthermore, the ability to control the thickness allows for the deposition of a functional coating which does not appear ostensibly visible, avoiding the possibility of giving an impression of a faulty or contaminated preform.

In a further aspect the present invention relates to a method for manufacturing double-walled containers, according to claim 2. The method described herein provides an improved way for the production of double-walled containers, preferably thermoplastic containers such as plastic bottles, whereby two preforms are used. The method possesses similar advantages as disclosed for the preform having a plasma deposited coating on a surface, but may have the additional advantage that if the inner surface of the outer preform and/or the outer surface of the inner preform are coated, the resulting full-sized double-walled container shows improved delamination of the inner container from the outer container. Further, comparing the currently employed methods wherein a layer is sprayed onto the surface of a preform, the plasma coating of the surface increases the ability of stretch blow moulding the preforms into thermoplastic containers. The bag-in-container comprises an inner layer, i.e. an inner container, and an outer layer, i.e. an outer container, obtainable by integrally blow molding of a double-walled preform for a bag-in-container as described herein. The inner layer of the double-walled preform forms the inner layer of the container upon blow molding. The outer layer of the double-walled preform forms the outer layer of the container upon blow molding.

The present invention further concerns a method for manufacturing a coated container, as described in claim 4. The present invention also concerns a coated container manufactured using said method for manufacturing a coated container. The disclosed method is especially advantageous for a more reliable production of containers, in particular thermoplastic containers. Preforms whereby the deposited coating is ostensibly visible could be accidentally thrown away before they undergo the stretch blow moulding process, as they give the impression of being faulty or contaminated. The method of the present invention allows to provide a functional coating which is of very high quality and smoothness, and is not ostensibly visible as a coating. In fact, the coating layer can be intact over the outer surface, the inner surface or both outer and inner surface of the preform and of the container. Further, the disclosed preforms are suitable to be stretch blown into containers. The preforms are especially more suitable to be used in a stretch blow moulding process if the whole inner and/or outer surface of the preform is coated.

The present invention also concerns a method for providing a coating layer on a container, comprising the steps of:
1') providing a low-energy, cold plasma;
2') exposing precursors and the container to said plasma, thereby chemically activating the precursors and/or the container;
3') depositing a coating layer on the container by reaction of the precursors with each other and/or with the container.

Note that the above method for providing a coating layer on a container is similar to the method for providing a coating layer on a preform in accordance with the present invention. Indeed, the method steps are the same, albeit performed on the already-formed container. However, note that the method can be provided on a container, independently of how the container is obtained or formed.

The present invention thereby further concerns a container comprising a coating layer provided on the container using the method for providing a coating layer on a container as described here above.

In a further aspect, the present invention relates also to the use of a coating layer on a preform according to claims 15.

### BRIEF DESCRIPTION OF THE DRAWINGS

**Figure 1** is a schematic representation of a preform for a container according to the first aspect of the invention.
**Figure 2** is a schematic representation of a container according to the first aspect of the invention.
**Figure 3** is a schematic representation of a preform for a bag-in-container comprising an inner preform and an outer preform, according to the second aspect of the invention.
**Figure 4** is a schematic representation of a bag-in-container according to the second aspect of the invention.

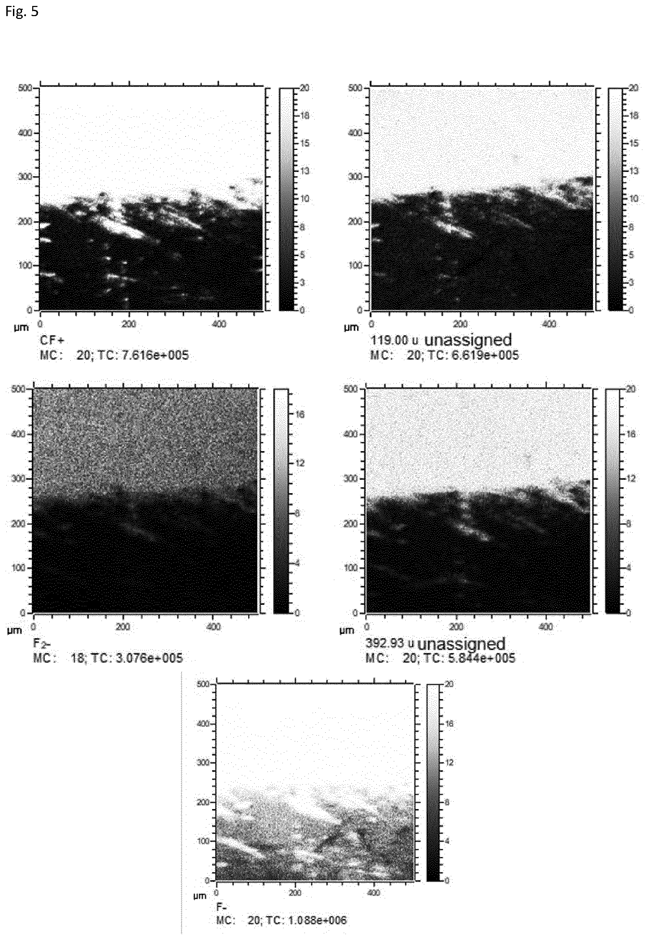

**Figure 5** shows an example of time-of-flight secondary ion mass spectrometry (TOF-SIMS) analysis on a PET preform, on which a coating layer according to the invention is applied to the top half of the analysed area. The detected ions are representative for the coating layer.

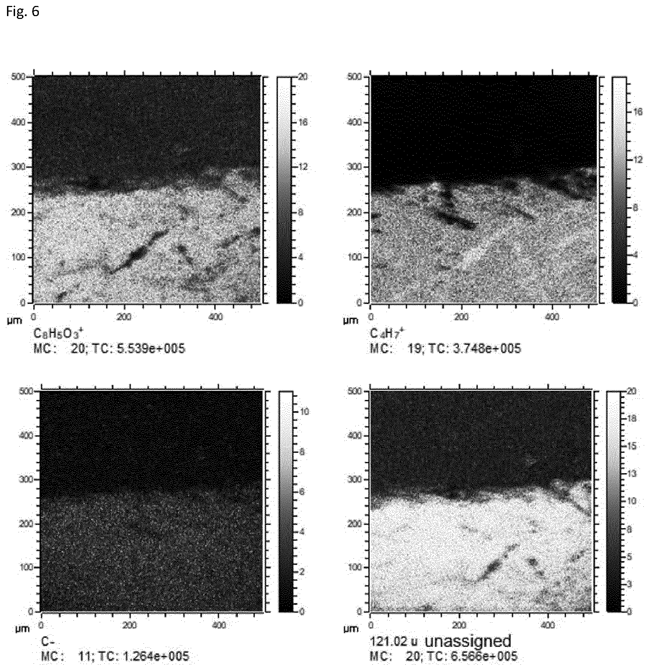

**Figure 6** shows an example of TOF-SIMS analysis on a PET preform, on which a coating layer according to the invention is applied to the top half of the analysed area. The detected ions are representative for PET.

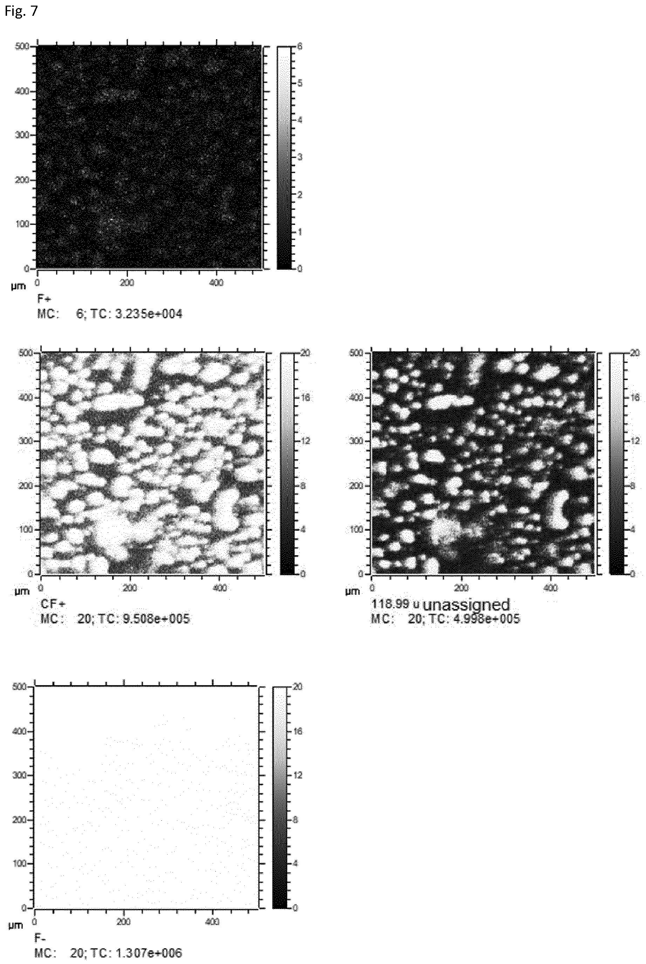

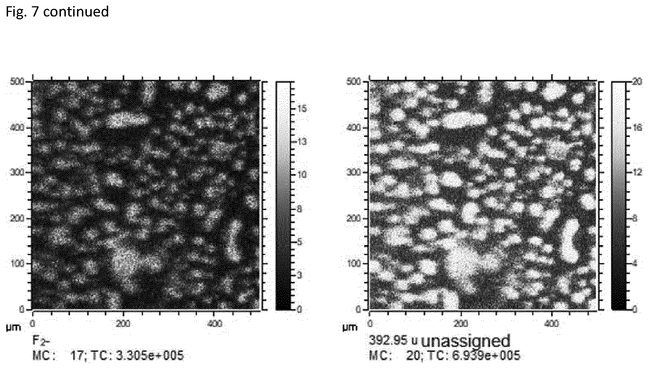

**Figure 7** shows an example of TOF-SIMS analysis on a container, which container was produced by blow moulding of a preform with a coating layer according to the invention applied thereon. The detected ions are representative for the coating layer.

### DETAILED DESCRIPTION OF THE INVENTION

The present invention relates to a method for providing a coating layer on a preform for a container, comprising the steps of:
1) providing a low-energy, cold plasma;
2) exposing precursors and the preform to said plasma, thereby chemically activating the precursors and/or the preform;
3) depositing a coating layer on the preform by reaction of the precursors with each other and/or with the preform.

The present invention also concerns a preform comprising a coating layer provided on the preform using the method for providing a coating layer on a preform for a container as described here above.

The present invention further concerns a method for manufacturing a coated container, comprising the steps of:
a) providing a preform, preferably of a thermoplastic material;
b) coating a surface of said preform by providing a coating layer on said preform in accordance with steps 1) to 3) above;
c) optionally storing and/or transporting said coated preform, and
d) increasing the coated preform in size, preferably by stretch blow moulding, thereby obtaining said coated container.

The present invention also concerns a coated container manufactured using the method for manufacturing a coated container.

The present invention also concerns a method for providing a coating layer on a container, comprising the steps of:
1') providing a low-energy, cold plasma;
2') exposing precursors and the container to said plasma, thereby chemically activating the precursors and/or the container;
3') depositing a coating layer on the container by reaction of the precursors with each other and/or with the container.

The above method for providing a coating layer on a container is similar to the method for providing a coating layer on a preform in accordance with the present invention. Indeed, the method steps are the same, albeit performed on the already-formed container. However, note that the method can provided on a container, independently of how the container is obtained or formed. In an embodiment, the container is obtained via stretch blow moulding, via injection moulding or via extrusion moulding.

The present invention also concerns a container comprising a coating layer provided on the container using the method for providing a coating layer on a container as described here above.

In an embodiment of the above methods, at least one precursor is administered in the plasma as a gas, as a liquid or as a solid, preferably as a gas or as a liquid in the form of an aerosol, most preferably as a liquid in the form of an aerosol.

Further, the present invention also concerns a method for manufacturing a double-walled container, comprising the steps of:
(i) providing an inner preform and an outer preform, said outer preform being hollow and comprising an open end through which the inner preform can be inserted;
(ii) providing a coating layer on an outer surface of the inner preform in accordance with the method described above and/or providing a coating layer on an inner surface of the outer preform in accordance with the method described above;
(iii) inserting the inner preform in the outer preform;
(iv) simultaneously increasing the coated preforms in size, preferably by stretch blow moulding.

Herein, the coating layer on the inner surface of the outer preform or the coating layer on the outer surface of the inner preform or, in a preferred embodiment, both the coating layer on the inner surface of the outer preform or the coating layer on the outer surface of the inner preform, allow step (iv) with improved delamination.

The present invention also concerns a double-walled preform for a bag-in-container, comprising an inner layer, i.e. an inner preform, comprising an outer surface and an outer layer, i.e. an outer preform, comprising an inner surface facing said outer surface of said inner preform, wherein at least one of the facing surfaces is coated with a coating layer applied using the method for providing a coating layer on a preform.

A preform is preferably made of a thermoplastic material for the use in a stretch blow process for manufacturing plastic containers, in particular plastic bottles. A preform is hollow having an open end thereby defining an inner surface and an outer surface.

The coating layer on the preform or the container preferably reduces the moisture pick-up rate of the preform or the container respectively.

The invention has been summarized in the corresponding section above. In what follows, the invention is described in detail, preferred embodiments are discussed, and the invention is illustrated via examples.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, 25 ≥6 or ≥7 etc. of said members, and up to all said members.

"A preform" as used herein refers an object that requires an at least one additional reshaping, whereby the object may or may not have undergone a preliminary reshaping.

"A thermoplastic preform" as used herein refers an object, partially or fully made from a thermoplastic material, that requires an at least one additional reshaping, whereby the thermoplastic object may or may not have undergone a preliminary reshaping.

"An aerosol" as used herein refers to a suspension of fine solid particles or liquid droplets, in air or in another gas.

"Stretch blow moulding", "blow-stretch moulding" or "blow moulding" as used herein refers to any process wherein a preform undergoes a shape transformation into a container, which may or may not comprise a thermoplastic material, under the influence of a pressurized fluid.

"A thermoplastic container" as used herein refers to any container partially or fully made from a thermoplastic material, e.g. a bottle or a box.

"UV" as used herein refers to an electromagnetic radiation with a wavelength from 10 nm to 400 nm.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

A low-energy plasma is defined herein as a plasma of which the power density is high enough to activate the precursors, the preform and/or the container, allowing a chemical reaction to take place, but low enough to prevent destruction of the precursors, the preform and/or container. The power density is preferably in the range of 0.2 Watts per liter (W/l, equal to W/dm³) to 8W/I, more preferably between 0.5 W/l and 7 W/l, still more preferably between 0.8 W/l and 6 W/l, yet more preferably between 1 W/l and 5 W/l, even more preferably between 1.5 W/l and 4 W/l, still even more preferably between 2 W/l and 3 W/l, such as 2 W/l, 2.1 W/l, 2.2 W/l, 2.3 W/l, 2.4 W/l, 2.5 W/l, 2.6 W/l, 2.7 W/l, 2.8 W/l, 2.9 W/l, 3 W/l or any value therebetween, most preferably in the range of 2.4W/l to 2.6 W/l.

A cold plasma is defined herein as a plasma of which the temperature is sufficiently low to not melt or otherwise damage the precursor and/or preform that are exposed to said cold plasma. The temperature of the plasma may preferably be 150°C or lower, more preferably 130 °C or lower, still more preferably 100 °C or lower, yet more preferably 70°C or lower, even more preferably 60°C or lower, yet more preferably 55°C or lower, still even more preferably 50°C or lower, even yet more preferably 45°C or lower. The temperature of the plasma may preferably be as low as room temperature, i.e., the temperature surrounding the plasma. Depending on the location where the coating process is carried out, room temperature may be in the range of 10 to 40 °C, preferably 15-30 °C, such as 20-25 °C. The temperature of the plasma will generally not be lower than room temperature.

When depositing temperature sensitive coatings it is important to keep the temperature of the plasma steady at the optimal value. Depending on the type of precursor or precursor mixture and/or the pressure, the optimal temperature may be selected. Hence, in an embodiment the temperature of the plasma is selected taking into account the type of precursor, the precursor mixture and/or the plasma pressure.

The plasma of the present invention is preferably an atmospheric plasma which has a pressure around ambient pressure. Such plasma is created and discharged at a pressure of between 400 and 1600 hPa, preferably at a pressure between 450 and 1400, even more preferably at a pressure between 500 and 1300 hPa, yet more preferably between 600 and 1250 hPa, even more preferably between 700 hPa and 1200 hPa, still more preferably between 800 hPa and 1150 hPa, yet more preferably between 900 hPa and 1100 hPa, most preferably about ambient pressure, which can typically be about 1013 hPa. Pressure of the plasma can play an important role in the quality of the deposited layer. Some plasma precursors are sensitive to too low and/or too high plasma pressures compared to the atmospheric pressure, while other precursors provide a better coating at lower or higher plasma pressures. However, note that low-energy, cold plasma can typically be applied under reduced pressure of lower than 400 hPa down to vacuum, or increased pressure of more than 1600 hPa, both types requiring a pressure vessel to maintain such low or high pressures. The use of a plasma with pressures in the currently preferred ranges around the ambient pressure reduces any costs and difficulties relating to maintaining pressure differences and pressure gradients.

In a preferred embodiment, the plasma is a dielectric barrier discharge plasma under atmospheric pressure.

The functionality of the layer may depend on the plasma conditions, e.g. temperature and pressure, in which the layer is deposited. The temperature and/or atmospheric conditions may therefore be selected taking into account the desired functionality of the coating layer.

In embodiments said precursors comprise at least one moiety chosen from the group comprising alkane, alkene, alkyne, benzene derivates, haloalkane, fluoroalkane, chloroalkane, bromoalkane, iodoalkane, alcohol, ketone, aldehyde, acyl halide, carbonate, carboxylate, carboxylic acid, ester, methoxy, hydroperoxide, peroxide, ether, hemiacetal, hemiketal, acetal, ketal, orthoester, heterocycle, orthocarbonate ester, amide, amines, imine, imide, azide, azo compound, cyanates, nitrate, nitrile, nitrite, nitro compound, nitroso compound, oxime, pyridine derivate, thiol, thioether, disulfide, sulfoxide, sulfone, sulfinic acid, sulfonic acid, sulfonate ester, thiocyanate, thioketone, thial, thioester, phosphine, phosphonic acid, phosphate, phosphodiester, boronic acid, boronic ester, borinic acid, borinic ester, silane or a combination thereof. Preferably, the at least one moiety is chosen from the group comprising alkane, alkene, alkyne, alcohol, silane or a combination thereof.

A specifically preferred embodiment of the method relates to an invention whereby the precursors are selected from the list of:
- acetylene,
- Tetraethyl orthosilicate (TEOS),
- cis-butene-1,4-diol,
- anti-bodies,
- polypeptides, and/or
- precursors suitable for protection in the UV and visible spectra.

These substances allow for a significant reduction of the moisture pick-up rate, but may also provide further functionalities to the preform or container.

Alternatively, or additionally, the precursors can be selected from the list of:
- fluoro-acrylate monomers,
- fluoroalkyl acrylate monomers,
- fluoro-methacrylate monomers,
- fluoro-alkyl methacrylate monomers,
- fluoro-silane monomers, and/or
- cyclosiloxanesfluoro-acrylate monomers,
or a combination or derivatives thereof.

Preferably, the precursors comprise a first precursor comprising fluoro-acrylate monomers, fluoroalkyl acrylate monomers, fluoro-methacrylate monomers, fluoro-alkyl methacrylate monomers, fluoro-silane monomers, or a combination or derivates thereof, and a second precursor comprising cyclosiloxanesfluoro-acrylate monomers

The deposited coatings from the mentioned precursors produce a preform with a moisture intake coefficient lower than 0.050% per week relative to the weight of the preform. As a result the preform validity increased with a minimum of four weeks. Further, the deposited coatings did not give an impression of a faulty or contaminated preform.

In an embodiment of the invention, the precursors comprise one of the above list of suitable precursors. However, in other embodiments, the precursors comprise two one or more of the above list of suitable precursors. A preferred embodiment of the method relates to an invention wherein the plasma coating is created using at least two precursors, wherein at least one of said precursors is suitable for protection in the UV and visible spectra. This combination gives rise to additional functionalities of the coating (such as reduced moisture intake and protection against UV/visible light), and/or may increase functionalities, such as obtaining an even higher reduction of the moisture intake coefficient, whereby the moisture intake coefficients could go below 0.030% per week relative to the weight of the preform.

The plasma chemically activates at least one of the precursors and/or the preform or container. In case a double-walled container is envisioned, the plasma chemically activates at least one of the precursors and/or the inner and/or outer preform or the inner and/or outer container. This activation of the precursors and/or the preform or container may occur by double atomic bonds opening, radical removal and/or ion formation. This allows and/or improves the reactions required to form the coating layer. These reactions may involve:
- reactions between precursors, such as polymerization reactions and cross-linking reactions, and/or
- reactions between precursors and the preform or container, such as covalent bonding reactions. Preferably, the coating layer is covalently bound to the surface.

This allows reactions, such as polymerization reactions to take place between the activated precursors, as well as between the activated precursors and the activated preform or container. Preferably the coating layer comprises crosslinks and/or the coating layer comprises covalent bonds with the preform or the container. Such crosslinks and covalent bonds are believed to be responsible for or at least improve the structural integrity of the coating. If the coating is applied to a preform which is later on in the process increased in size, e.g. by blow stretch moulding, the crosslinks and covalent bonds between the coating layer and the preform prevent the coating layer from being damaged, even when the preform is stretched.

In embodiments of the invention, the plasma coating has a thickness between 5 and 600 nm, preferably between 5 and 500 nm, more preferably between 10 and 500 nm, even more preferably between 10 and 300 nm, yet more preferably between 10 and 200 nm, still more preferably between 10 and 80 nm, such as 10 nm, 20 nm, 30 nm, 40 nm, 50 nm, 60 nm, 70 nm, 80 nm or any value therebetween, most preferably about 20 nm. The plasma coating thickness can be well-controlled by controlling the exposure time of the preform or container to the plasma and/or the precursors.

In preferred embodiments, the coating layer is applied on the entire inner surface, on the entire outer surface or on the entire inner and outer surface of the preform or the container. In that way, the surface properties (e.g. adhesion properties or printability properties) of the inner and/or outer surfaces of the preform or container onto which the coating layer is applied are determined mainly by the properties of the coating layer.

Preferably the coating layer is intact. An intact coating layer is defined as a coating layer which covers the entire surface onto which it was applied, without regions where the material of the surface onto which the coating layer was applied is exposed. In that way, the surface properties, such as adhesion properties, of the preform or container onto which the coating layer is applied are determined by the properties of the coating layer.

In order to confirm the presence of the intact coating layer with a thickness according to the invention, surface techniques, such as time of flight secondary ion mass spectrometry (TOF-SIMS), may be applied.

Preferably the coating layer is a conformal coating layer. Such a conformal layer follows closely the surface, even in case the surface comprises large curvatures, e.g. near the opening, near a neck or near the bottom of the preform or container.

In a preferred embodiment a colouring agent such as a pigment or a dye, is added to the plasma, preferably as a gas or a liquid or as a powder dissolved in a liquid or colloidal mixes in the form of an aerosol. Colouring allows an easier quality check by visible inspection, but may also be used for other visual effects. For example, when fluorescent materials are incorporated in the coating layer, the presence of an intact coating layer may be demonstrated using fluorescence measurements. Additionally, if the intention is to provide a direct printing onto the container later on, providing the colouring agent already to the plasma may provide a more even background colour in a much easier and faster manner than a colouring process on top of the coating.

Because of the low thickness of the coating layer, only a small fraction of the total amount of material of the preforms and containers according to the invention are coating material. Because of this, the coated preforms and containers can be recycled well, without negatively affecting the quality of the recycled material.

Furthermore, the coating may preferably act as a barrier against gasses. Gas migration may cause degradation of the fluid inside the container. Preferably the coating acts as a barrier against oxygen (O₂) and carbon dioxide (CO₂).

In a preferred embodiment of the invention, the coating layer provided on the preform or on the container can be used for:
- reducing moisture take-up;
- reducing surface tension;
- altering release properties;
- acting as a gas-permeation barrier, such as an O₂-barrier and/or a CO₂-barrier;
- altering slip properties;
- altering hydrophobic properties;
- altering optical properties, and/or
- altering reheat properties.

The functionality of the coating is at least partially determined by the type of precursors which are used. The following table 1 summarizes the relation between functionalities and precursors, as observed in experiments by the inventors.

**Table 1.**

| **Function** | **Precursor type** | **Tested precursors** |
|---|---|---|
| avoid moisture pick up of the preform | Fluorocarbons, siloxanes, fatty acids, hydrocarbons | PFDA, HMDSO, TEOS, VEOS, V4D4, nonanoic acid, nonene, dodecane |
| improve release of preforms from one another to improve blow stretch moulding infeed and process | Fluorocarbons, siloxanes, polymer solutions | PFDA, EVOH |
| improve heat absorption, e.g. to improve blow stretch moulding processability | Metal nanoparticles, carbon nanoparticles, conductive polymers | Au, CNTs, polyaniline, poly thiophene |
| reduce friction between preforms and containers to improve the preforms and containers being conveyed in a filling line | Fluorocarbons, siloxanes, glycols, hydrocarbons, fatty acids | PFDA, HMDSO, PEGMEA, di(ethylene glycol) ethyl ether acrylate (DEGGEA) |
| colour the preform/container for traceability, anti-counterfeiting or any other desired function | Acrylic inks, UV tracer solutions | acrylic inks (e.g. available from STS™), Rhodamine, Tartrazine, Fluorescein, Uranin (e.g. available from Radiant™ UV tracers) |
| improve CO₂ barrier property | Siloxanes, polymer solutions | HMDSO, VEOS, EVOH |
| improve O₂ barrier | Siloxanes, polymer solutions | HMDSO, VEOS, V4D4, EVOH |
| improve light barrier | UV light absorbers, conjugated aromatic molecules, Hindered amine light stabilizers, inorganic oxides | TiO₂, Tinuvin® families |
| limiting migration of undesired chemicals arising in the material to the liquid in the container | Siloxanes | HMDSO |
| internal anti-stick properties for easy-release of viscous products such as mayonnaise, ketchup, syrups, etc. | Fluorocarbons, glycols | PFDA, PEGMEA, CAS 116-143, CAS 116-15-4, DEGGEA |
| improve direct object printing ability of the container | Acrylates, methacrylates, hydroxyl groups, epoxy groups | AA, MMA, HEMA, HEAA, GLYMA |
| improve stress cracking resistance of the container | Polymer solutions, siloxanes | EVOH, HMDSO, VMOS, PFDA, nonene |

In the table above, abbreviations have been used for at least the following chemical compounds: perfluorodecanoic acid (PFDA), hexamethyldisiloxane (HMDSO), tetraethyl orthosilicate (TEOS), vinyltriethoxysilane (VEOS), tetravinyltetramethylcyclotetrasiloxane (V4D4), , ethylene vinyl alcohol (EVOH), carbon nanotubes (CNTs), poly(ethylene glycol) methyl ether acrylate (PEGMEA), di(ethylene glycol) ethyl ether acrylate (DEGGEA), acrylic acid (AA), methyl methacrylate (MMA), hydroxyethyl methacrylate (HEMA), N-(2-Hydroxyethyl)acrylamide (HEAA), Glycidyl methacrylate (GLYMA), vinylmethoxysiloxane (VMOS).

These functionalities are now discussed in more detail:

### a. moisture pick-up reduction

One function of a coating layer is to reduce the moisture pick-up rate of a coated preform, prior to increasing the preform to a fully-sized container, e.g. by stretch blow moulding.

When a surface of the preform is coated, the plasma deposited coating can also result in a better stretch blow moulding ability compared to the currently employed methods. In a production process reproducibility is extremely important. A better stretch blow moulding allows to increase the reproducibility of the production of plastic containers from the thermoplastic preforms.

As indicated above, the plasma coating results in a reduction of the moisture pick-up rate, thereby improving the shelf-life of the preform. Increased storage time is advantageous for several reasons. The production of the plastic containers from preforms, whereby the preforms are preproduced, can be stopped due to many different reasons, e.g. one or more machines have broken down, national holidays whereby the factory has to close down for one or more weeks, the employees are on a strike, etc. Also, the preforms may need to be transported over long distances with long travelling times, e.g. by oversea shipment. The preforms, close to their expiration date, could be already expired by the time the factory is functional again. Thus both time and cost efficiency of the whole production process may be reduced. In many cases by employing a correct management, the previous could be avoided. However, in some cases due to unexpected circumstances, mismanagement or human mistakes, expiration of the preproduced preforms is unavoidable. In these cases it would be advantageous if the shelf-life of the preforms was increased. Improving the shelf-life of the preforms could also unlock or strengthen the possibility to produce the preforms at other locations compared to the one used for the production of the plastic containers. The previous could especially be advantageous, if for some reason the production of the preforms is located on the other side of the world compared to the production of the plastic containers. Further, increasing the shelf-life of the preform enhances the possibility to perform the production of the preforms and the containers by different manufacturers. This could be financially beneficial and/or beneficial for technological development. The separation of manufacturers may result in a better and/or faster further development of the manufacturing process. More in particular, the preforms tend to be significantly smaller than the containers and are more easily and more cheaply transported than the containers. Hence, it tends to be more cost effective to produce preforms in a specialized facility, and to transport these preforms to a second facility where the containers are made and can be also filled and prepared for consumption.

Note that the moisture pick-up rate is reduced already considerably if only part of the complete surface the preform is treated. For instance, if only the outer surface is treated, the pick-up rate could be approximately halved, and, if the preforms are sealed off from the environment, the pick-up rate could be reduced by a factor of 10 or more.

The plasma deposition of a coating for the reduction of moisture provides a means to control the coating deposition process down to a nanoscale precision. Thickness control is important as the deposition of a too thick layer could form an ostensibly visible coating. Ostensibly visible coatings could give an impression of a faulty or contaminated preform, and are as such undesired. Note that in the context of the present document, the coating may produce visible effects such as colouring or a smooth appearance. However, it is an advantage of the present invention that such effects do not appear to be the result of a coating.

In a preferred embodiment said preform has a moisture intake coefficient lower than 0.070% per week relative to the weight of said preform, preferably lower than 0.050% per week relative to the weight of the preform, even more preferably lower than 0.040% per week relative to the weight of the preform, most preferably lower than 0.030% per week relative to the weight of the preform. The currently available methods for the reduction of moisture pick-up rate obtain a preform with a moisture intake coefficient higher than 0.070% per week relative to the weight of said preform. In order to increase the shelf-life of the preform, the inventors have found that the moisture intake coefficient has to be lower than 0.070% per week relative to the weight of said preform. A moisture intake coefficient lower than 0.050% per week relative to the weight of said preform increases further the shelf-life of the preform. The applicant has noticed that by decreasing the moisture intake coefficient to below 0.070% per week relative to the weight of said preform, the preform validity increased with a minimum of four weeks. The further reduction of the moisture intake coefficient, resulted in a even higher minimal increase of the shelf-life. The applicant notes that the reduction of the moisture intake coefficient to below 0.030% per week relative to the weight of the preform increased the shelf-life by more than twelve weeks.

In an embodiment, the precursors comprise fluorocarbons, siloxanes, fatty acids and/or hydrocarbons, or any combination thereof, preferably PFDA, HMDSO, TEOS, VEOS, V4D4, nonanoic acid, nonene, dodecane or any combination thereof. Reduction of the moisture pick-up rate has been experimentally observed for such precursors.

### b. improve release of preforms from one another, e.g. during blow stretch moulding

This is particularly important at the blow stretch moulding infeed, e.g. when manufacturing a double-walled container such as a bag-in-container.

In an embodiment, the precursors comprise fluorocarbons, siloxanes, polymer solutions or any combination thereof, preferably PFDA, EVOH or any combination thereof. Improved release has been experimentally observed for such precursors.

### c. improve preform heat absorption

This is particularly important to improve blow stretch moulding processability.

In an embodiment, the precursors comprise metal nanoparticles, carbon nanoparticles, conductive polymers or any combination thereof, preferably Au, CNTs, polyaniline, polythiophene or any combination thereof. Improved heat absorption has been experimentally observed for such precursors.

### d. reduce friction between preforms and resulting containers

This is particularly important to improve processes wherein the preforms and containers being conveyed in a filling line.

In an embodiment, the precursors comprise fluorocarbons, siloxanes, glycols, hydrocarbons, fatty acids or any combination thereof, preferably PFDA, HMDSO, PEGMEA, DEGGEA or any combination thereof. Reduced friction has been experimentally observed for such precursors.

### e. colour the preform or container

This is particularly important for traceability, anti-counterfeiting or other desired functions.

In an embodiment, the precursors comprise one or more acrylic inks, UV tracer solutions or any combination thereof, preferably STS™ inks, Radiant™ UV tracers or any combination thereof. Smooth colouring of the preform or container has been experimentally observed for such precursors.

### f. improve the CO₂ barrier property of the preform/container

In an embodiment, the precursors comprise siloxanes, polymer solutions or any combination thereof, preferably HMDSO, VEOS, EVOH or any combination thereof. Improved CO₂ barriers have been experimentally observed for such precursors.

### g. improve the O₂ barrier property of the preform/container

In an embodiment, the precursors comprise siloxanes, polymer solution or any combination thereof, preferably HMDSO, VEOS, V4D4, EVOH or any combination thereof. Improved O₂ barriers have been experimentally observed for such precursors.

### h. improve the light barrier

This is particularly important against visible light and/or against UV light.

In an embodiment, the precursors comprise UV light absorbers, conjugated aromatic molecules, hindered amine light stabilizers, inorganic oxides or any combination thereof, preferably TiO₂, Tinuvin® families or any combination thereof. Improved light barriers have been experimentally observed for such precursors.

### i. limiting migration of undesired chemicals

Undesired chemicals may arise in the material to the liquid in the container, such as acetaldehyde being formed in PET materials which could change the smell and taste of the liquid. In this respect the present invention also aims at providing scavenging functionalities.

In an embodiment, the precursors comprise siloxanes or any combination thereof, preferably HMDSO or any combination thereof. Limited migration of undesired chemicals has been experimentally observed for such precursors.

### j. internal anti-stick properties

This is particularly important for easy-release of viscous products such as mayonnaise, ketchup, syrups, etc., whereby the coating is applied on at least the inner surface of the preform and/or container.

In an embodiment, the precursors comprise fluorocarbons, glycols or any combination thereof, preferably PFDA, PEGMEA, CAS 116-143, CAS 116-15-4, DEGGEA or any combination thereof. Internal anti-sticking has been experimentally observed for such precursors.

### k. improve direct object printing ability of the preform/container

In an embodiment, the precursors comprise acrylates, methacrylates, hydroxyl groups, epoxy groups or any combination thereof, preferably AA, MMA, HEMA, HEAA, GLYMA or any combination thereof. Improved direct printing has been experimentally observed for such precursors.

### I. improve stress cracking resistance of the preform/container.

In an embodiment, the precursors comprise polymer solutions, siloxanes or any combination thereof, preferably EVOH, HMDSO, VMOS, PFDA, nonene or any combination thereof. Improved stress cracking resistance has been experimentally observed for such precursors.

The above functionalities may be desired for the complete preform or container, but may also be desired or needed only on a portion of the preform or container. Moreover, different portions of the container may be desired to have different functionalities, or a different combination of functionalities. Hence, in embodiments of the present invention, different coatings may be applied on different portions of the preform and/or container. In case a double-walled container is envisioned, different coatings may be applied on different portions of the inner and/or outer preform, and/or on different portions of the inner and/or outer container. In other embodiments, the plasma coating can be deposited on at least one section or over the whole surface of the inner and/or outer preform.

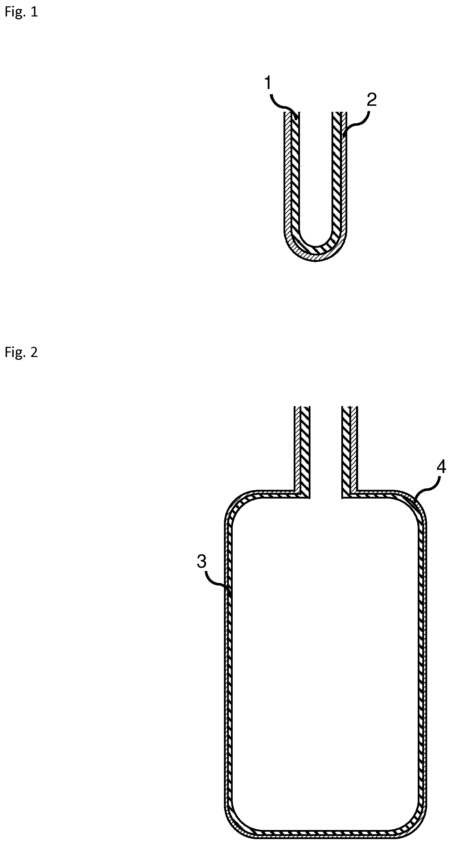

Figure 1 is a schematic representation of a cross-section of a preform for a container according to the invention. With reference to figure 1, there is provided a preform for a container (1), comprising a coating layer (2). In figure 1, the coating layer is present on the outside of the preform. Alternatively, or in addition, the coating layer may be present on the inside of the preform.

Figure 2 is a schematic representation of a cross-section of a container obtainable by blow moulding of preform (1), showing a container (3), comprising a coating layer (4). In figure 2, the coating layer is present on the outside of the container. Alternatively, or in addition, the coating layer may be present on the inside of the container.

In an embodiment, the preforms for the containers as described herein may have a low surface energy. A coating with a low surface energy may serve different functionalities, including but not limited to reduced moisture pickup and improved delamination of the inner and outer preform in the case of a double-walled preform or double-walled container. A coating layer with low surface energy may also be referred to as a hydrophobic coating layer. Preforms are often produced in one location and blow moulded into containers a different location, for instance in the same location where the blow moulded containers are filled. This drastically reduces the transportation volume compared to when the blow moulded containers were to be transported. However, preforms may have a limited shelf-life, and after a certain period, the blow moulding properties of the preform may decrease. Surprisingly, it has been found that preforms with a coating layer with low surface energy have an increased shelf-life. This also applies to nag-in-container and a container having a hydrophobic coating.

Low surface energy and/or hydrophobicity may be expressed in terms of water contact angle. The preferred contact angle may be 90° or higher, preferably 100° or higher, more preferably 120° or higher, even more preferably 150° or higher, such as 160° or higher. When the water contact angle is 150° or higher, the coating layer may be regarded superhydrophobic.

When a double-walled container, such as a bag-in-container, is manufactured in accordance with the present invention, the inner preform and outer preform may be formed of the same and/or of different materials. Preferably the same material of the inner preform and of the outer preform are not in contact with each other. Also, if inner preform and outer preform are formed of different materials, they are preferably not in contact with each other.

Surprisingly, the hydrophobic coatings applied in accordance with the present invention do not have to result in a change of the color in the product. Such color changes are commonly observed in prior art other methods to improve shelf-life, such as the use of a scavenger or applying a water-resistant layer onto the inner and/or outer surface of a preform.

During use of a bag-in-container, elevated gas pressure (vis-à-vis the atmospheric pressure) is typically applied between the outer layer, i.e. the outer container, and the inner layer, i.e. the inner container, causing the fluid to be dispensed from the bag, without allowing gas to enter the bag, thereby keeping the contents of the container fresh. For proper functioning during use, it is important that the inner container, or bag delaminates from the outer container.

In an embodiment, the inner container delaminates from the outer container after integrally blow molding of the preform for a bag-in-container in a controlled manner.

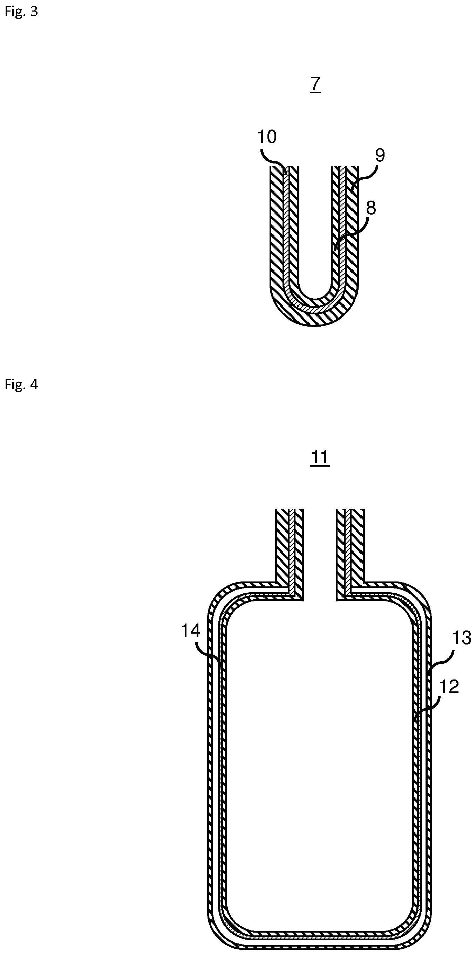

Figure 3 is a schematic representation of a cross-section of a preform for a bag-in-container according to an aspect of the invention. With reference to figure 3, there is provided a preform for a bag-in-container (7), comprising an inner preform (8) and an outer preform (9), wherein the inner preform is coated with coating layer (10). As a consequence, the inner preform and outer preform are not in contact. In figure 3, the coating layer is present on the outer surface of the inner preform. Alternatively, or in addition, the coating layer may be present on the inner surface of the outer preform. When the preform is assembled from separately manufactured inner and outer preforms, a gap may be present between the inner and outer preform, *e.g.* between the coating layer and the outer preform.

Figure 4 is a schematic representation of a cross-section of a bag-in-container after blow moulding of preform (7), showing an inner container (12), an outer container (13), and a coating layer (14). There is no contact between the inner container and the outer container. In figure 4, the coating layer is present on the outer surface of the inner container. Alternatively, or in addition, the coating layer may be present on the inner surface of the outer container. It is also possible that after blow molding the coating layer on the outside of the inner container is in contact with the inside of the outer container. Similarly, a coating layer on the inside of the outer container can be in contact with the outside of the inner container.

In a preferred embodiment, the coating layer of the inner preform and/or the outer preform is superhydrophobic.

In an embodiment of the invention, a double-walled container is manufactured by integrally blow moulding of the preform for a bag-in-container.

In an embodiment of the invention, a double-walled container is manufactured by increasing the preform for a bag-in-container in size, preferably by stretch blow moulding, with a stretch ratio of between 5 and 20.

The coating layer may prevent contact between the material of the inner preform and the material of the outer preform. Therefore, if the inner preform and the outer preform are of the same material, the same material will not be in contact. Instead, when the coating layer is present on at least one of the facing surfaces, delamination properties depend on the interaction between the coating layer and the other facing surface. In this way, the coating layer may improve release of the inner preform from the outer preform.

The present invention further relates to a bag-in-container as described above, wherein the inner container delaminates from the outer container after integrally blow moulding of the preform for the bag-in-container.

The present invention further also relates to use of plasma deposition for the production of a bag-in-container, said bag-in-container comprising an inner container with an outer surface and an outer container with an inner surface facing the outer surface of the inner container, wherein at least one of said facing surfaces is coated with a coating layer.

In other embodiments, the plasma coating can be deposited on at least one section or over the whole surface of the preform.

Different precursors may be deposited using a layer by layer deposition strategy, whereby in each consecutive deposition step one precursor is deposited as a layer onto at least one section of or onto the whole surface of the preform. Another possibility includes depositing one or more layers comprising a mixture of different precursors, whereby the deposition is achieved by introducing the different precursors simultaneously into the plasma. A person skilled in the art will note that any combination of the deposition possibilities mentioned in this document could be applied in order to obtain a coating with a least two different precursors.

In another preferred embodiment said thermoplastic preform comprises at least one polymer chosen from the list of polyethylene terephthalate (PET), polyethylene (PE), polypropylene (PP), polyethylene 2,5-furandicarboxylate (PEF) and polyethylene naphthalate (PEN) and polylactic acid (PLA).

The functionality of the layer may significantly depend on the conditions, e.g. temperature and pressure, in which the layer is deposited. In order to obtain good functionality, it is important to work at optimal conditions, which can be different for each used precursor, although always in the preferred ranges specified in this document.

If the preform is being increased in size, the stretching ratio with respect to volume preferably is between 2 and 20, more preferably between 10 and 15, still more preferably between 12 and 15, such as 12, 13, 14, 15 or any value there between, most preferably about 13.5. Preferably, said preform increases in length with a stretching ratio of 2 to 20, preferably 3 to 15, more preferably 4 to 12, even more preferably 5 to 10, and/or said preform increases in diameter with a stretching ratio of 2 to 20, preferably 3 to 15, more preferably 4 to 12, even more preferably 5 to 10. During the step of increasing the size of the preform, the length, diameter and/or volume are increased in accordance with the above-mentioned ranges. The thickness of the coating layer decreases with the increase of the stretch ratio. It is believed that the thickness of the coating on the preform decreases inversely proportional to the increase in surface. As the shape of the preform may change during the increase in size, the theoretical inverse proportionality of the thickness reduction to the volume stretching ratio to the power 2/3 does not necessarily hold. In an embodiment, the thickness of the coating on the container is 30nm or less, more preferably 25 nm or less, still more preferably 20 nm or less, yet more preferably 15 nm or less, even more preferably 10 nm or less, such as 10 nm, 9 nm, 8 nm, 7 nm, 6 nm, 5 nm, 4 nm, 3 nm, 2 nm, 1nm or any value there between, most preferably about 6 nm. Preferably the coating on the container is at least 2 nm thick.

In order to stretch blow mould the preforms into containers, the thermoplastic preforms preferably possess a stretching ratio in the length as well as in diameter.

The method for manufacturing a coated container or a double-walled container, may comprise the step of stretch blow moulding a preform.

An apparatus for providing a coating layer onto a preform or a container, in accordance with the present invention, can be found in European patent application no. EP18179354.8 filed on 22 June 2018 and in International patent application no. PCT/EP2019/066647 filed on 24 June 2019, both of which are incorporated. Such apparatus and the methods described in these documents can be used to provide the coating layer discussed in the present document. Furthermore, the apparatus and methods described therein may be used to provide different portions of the preform or container with different coatings and different functionalities.

The coating layer can thus be provided using an apparatus for depositing a coating via an atmospheric pressure plasma jet, the apparatus comprising:
- a plasma jet generator comprising a jet outlet; and
- a nozzle comprising an adaptor and a shield, preferably a replaceable shield, the shield comprising a jet inlet, a nozzle outlet and a sidewall extending from the jet inlet to the nozzle outlet,
wherein the adaptor is preferably configured for detachably attaching the shield onto the plasma jet generator and thereby communicatively coupling the jet outlet and the jet inlet.

Preferably, the shield comprises at the jet inlet a flange attached to the sidewall, and wherein the adaptor comprises a retaining wall comprising an opening with size and shape adapted for retaining the flange.

Preferably, the shield is monolithic.

Preferably, the shield comprises an insulating material. More preferably, the shield comprises, and preferably is made of, a polymer material.

Preferably, the nozzle outlet of the shield comprises a non-planar edge.

Preferably, the jet outlet comprises an opening, and the jet inlet comprises an opening larger than the opening of the jet outlet.

Preferably, the sidewall comprises a tapering portion.

Preferably, the sidewall of the shield comprises at least one precursor inlet.

Preferably, the nozzle comprises a homogenization means, preferably the shield comprising flow disturbance elements.

Preferably, the nozzle is adapted for cooling, preferably the sidewall of the shield comprising a channel for passage of a cooling fluid.

Preferably, the nozzle outlet of the shield comprises an edge, and the apparatus is configured for maintaining said edge at a distance of at least 0.1 mm and at most 5 mm, preferably at least 0.2 mm and at most 2 mm, more preferably at least 0.5 mm and at most 1 mm, of said surface of said substrate.

A preform or a container within the context of the present document have a particular, pre-defined object profile. Hence, the preform and/or container may be provided with a coating, using method for plasma coating an object, i.c. the preform or the container, wherein the object comprises an object profile, the method comprising the steps of:
a. manufacturing a replaceable shield comprising a jet inlet, a nozzle outlet and a sidewall extending from the jet inlet to the nozzle outlet, wherein the nozzle outlet comprises an edge essentially congruent to at least part of the object profile;
b. detachably attaching the replaceable shield to a jet outlet of a plasma jet generator;
c. placing the preform or the container at the nozzle outlet such that the object profile fits closely to the nozzle outlet edge, thereby minimizing a gap between the nozzle outlet and the preform or container;
d. plasma coating the preform or container using a method in accordance with the present invention, preferably with a low-temperature, oxygen-free plasma at an operating pressure which is higher than the ambient pressure, preferably by at most 10%, by providing a plasma jet in the shield via the plasma jet generator and injecting the precursors in the plasma jet in the shield, thereby creating said operating pressure,
thereby plasma coating the object in an oxygen-depleted plasma zone.

Note that the edge of the nozzle outlet may be essentially congruent to a portion of the object profile which is to be provided with a coating layer for a first pre-determined functionality and that a second shield may be provided, with a second nozzle outlet having a second edge which is essentially congruent to a second portion of the object profile which is to be provided with a second coating layer for a second pre-determined functionality different from the first functionality. This allows different portions of the preform and/or container to obtain a different set of properties.

Preferably, step d comprises the step of:
e. relatively moving a surface of the preform or container and the nozzle outlet for depositing a coating on said surface.

Preferably, during step e of relatively moving a surface of the preform or container and the nozzle outlet for depositing a coating on said surface, said edge is maintained at a distance of at least 0.1 mm and at most 25 mm, preferably at least 0.2 mm and at most 10 mm, more preferably at least 0.5 mm and at most 2 mm, of said surface of said substrate, and thereby depositing a coating on said surface.

Hereby, the object profile of the preform or container is preferably essentially axially symmetric around a central axis and said relative movement comprises a relative rotation around said central axis.

The invention is further described by the following non-limiting examples which further illustrate the invention, and are not intended to, nor should they be interpreted to, limit the scope of the invention.

### Examples and tests

### Example 1: coating integrity

To test the homogeneity of the coating and the coating integrity even after blow stretching the preform to a full sized container, two preforms are provided. The preforms are made of PET by injection moulding and have a dark greyish colour due to a silver colorant added to the PET which in the current case acts as a background colour for better spotting the effects of the coating. A green colorant has been implemented using the described invention.

Preform 1 remains untreated, acting as a reference. Preform 2 is treated with a plasma coating as claimed in claim 1. The coating is performed with a colour pigment (green) added to the plasma via an aerosol.

The preforms are subsequently inflated via the preform opening by blow stretching to a full sized bottle with a ratio of approximately 11. The reference bottle obtained from preform 1 ("bottle 1") shows small defects near the top at the so-called "Lamello"-area around the opening, which is a stiffened ring or series of rings, extending around the periphery of the container and which results from increased crystallization in the preform, and near the bottom around the injection point of the preform. Both defects are typical of the blow stretching process. Bottle 1 has a light greyish colour except with small intensity fluctuations near the two defects. The bottle obtained from preform 2("bottle 2") shows a smooth and even colour (light green) all over the bottle with the same kind of intensity fluctuations near the defects. The preform 2 shows an even green colour, whereas the bottle 2 shows a very lightly green colour.

The smooth light-green colour all over bottle 2 shows that the coating remains intact even after inflating the preform by a volume ratio of 11. The lightening of the colour shows that the colour pigment is well distributed all over the bottle and that the coating becomes stretched and thereby more transparent, albeit in a very smooth manner, indicating that the coating sticks very well to the complete surface of the preform and bottle.

### Example 2: surface energy

As indicated above, one advantage of the present invention is that the coating on the preform and the resulting container can serve multiple purposes. It may for instance act as a moisture barrier against degradation of the preform during storage, but may also act as a moisture barrier for the container and can have further effects such as:
- provide colour which can be different from the material colour of the thermoplast, e.g. by adding a colour pigment to the plasma via the gas or aerosol. See example 1;
- ensure that an inner container easily releases from an outer container of a double-walled container.

The releasing is greatly improved if the surface energy is reduced. However, plasma treatments without coating tend to increase the surface energy. The inventors have found that the surface energy is nevertheless reduced if at least one precursor is administered in a plasma as a gas or a liquid in the form of an aerosol.

To test the surface energy reduction, two preforms are provided. They are made of PET with a silver colorant for providing an easy background colour when using a pen test.

Preform 1 remains untreated, whereas preform 2 is provided with a coating according to the present invention.

The surface energy of the preforms is tested using a set of test pens having different types of ink, each type of ink having well-calibrated surface energies. If the surface energy of the substrate is equal to or higher than the surface energy of the ink, the ink will expand on the surface and result in a smooth and even colouring. If the surface energy of the substrate is lower than the surface energy of the ink, the ink will conglomerate in inhomogeneous droplets.

Both preforms are subjected to 3 test pens having surface energies of 34 mN/m, 38mN/m and 44mN/m respectively. It was found that the untreated preform 1 has a surface energy between 38 and 44 mN/m, consistent with the general assumption that PET has a surface energy between 40 and 50 mN/m, making it difficult to paint and requiring more force for delamination. The treated preform has a surface energy of less than 34 mN/m, which results in improved delamination when used e.g. in a double-walled container, such as a bag-in-container.

The present example shows that the surface energy can be reduced using a plasma with precursors as discussed above. However, the inventors have also noted that certain types of precursors may increase the surface energy of the coated surface. Such higher surface energy may be preferred to obtain other functionalities, in particular improving direct printing ability (resulting in accurate, high-quality printed images).

## Claims

1. Method for providing a coating layer on a preform for a container, comprising the steps of:
1) providing a low-energy, cold plasma;
2) exposing precursors and the preform to said plasma, thereby chemically activating the precursors and/or the preform;
3) depositing a coating layer on the preform by reaction of the precursors with each other and/or with the preform.

2. Method according to claim 1 for manufacturing a double-walled container, comprising the steps of:
(i) providing an inner preform and an outer preform, said outer preform being hollow and comprising an open end through which the inner preform can be inserted;
(ii) providing a coating layer on an outer surface of the inner preform in accordance with the method according to claim 1 and/or providing a coating layer on an inner surface of the outer preform in accordance with the method according to claim 1;
(iii) inserting the inner preform in the outer preform;
(iv) increasing the coated preforms in size, preferably simultaneously.

3. Method according to claim 2, wherein a coating layer is provided on the outer surface of the inner preform and on the inner surface of the outer preform.

4. Method according to claim 1 for manufacturing a coated container, comprising the steps of:
a) providing a preform, preferably of a thermoplastic material;
b) coating a surface of said preform by providing a coating layer on said preform in accordance with claim 1;
c) optionally storing and/or transporting said coated preform, and
d) increasing the coated preform in size,
thereby obtaining said coated container.

5. Method according to any of the preceding claims, wherein at least one precursor is administered in the plasma as a gas, as a liquid or as a solid, preferably as a gas or as a liquid in the form of an aerosol, most preferably as a liquid in the form of an aerosol.

6. Method according to any of the preceding claims, wherein the coating layer is covalently grafted onto the at least one of the facing surfaces.

7. Method according to any of the preceding claims, wherein the coating layer is crosslinked, such that the layer stays intact when the preform is stretched.

8. Method according to any one the preceding claims, wherein the preform comprises a thermoplastic material, preferably wherein the thermoplastic material comprises one or more selected from the group consisting of PET, PLA, PEF, PEN, PP and PE.

9. Method according to any one the preceding claims, wherein the preform

10. Method according to any of the preceding claims, wherein said plasma is created and discharged at a pressure between 500 and 1300 hPa.

11. Method according to any of the preceding claims, wherein said plasma is created and discharged at a temperature between 10 and 130°C.

12. Method according to any of the preceding claims, wherein the coating layer of the preform has a thickness between 5 and 600nm, preferably between 10 and 300 nm.

13. Method according to any of the preceding claims, wherein the precursors are selected from the list of:
- acetylene,
- Tetraethyl orthosilicate (TEOS),
- cis-butene-1,4-diol,
- anti-bodies,
- polypeptides,
- precursors suitable for protection in the UV and visible spectra,
- fluoro-acrylate monomers,
- fluoroalkyl acrylate monomers,
- fluoro-methacrylate monomers,
- fluoro-alkyl methacrylate monomers,
- fluoro-silane monomers,
- cyclosiloxanesfluoro-acrylate monomers,
or a combination or derivatives thereof.

14. Method for providing a coating layer on a container, comprising the steps of:
1') providing a low-energy, cold plasma;
2') exposing precursors and the container to said plasma, thereby chemically activating the precursors and/or the container;
3') depositing a coating layer on the container by reaction of the precursors with each other and/or with the container.

15. Use of a coating layer provided on a preform according to claim 1 or provided on a container according to claim 6, for:
- reducing moisture take-up;
- reducing surface tension;
- increasing hydrophobicity;
- altering release properties;
- acting as a gas-permeation barrier, such as an O₂-barrier and/or a CO₂-barrier;
- altering slip properties;
- altering hydrophobic properties;
- altering optical properties, and/or
- altering reheat properties.
